Europäisches Patentamt

European Patent Office

Office européen des brevets

(11) Veröffentlichungsnummer: **0 287 519 B1**

(19)

(12) **EUROPÄISCHE PATENTSCHRIFT**

(45) Veröffentlichungstag der Patentschrift: **25.11.92**

(51) Int. Cl.5: **B23Q 35/08**, B23Q 5/36

(21) Anmeldenummer: **88810239.9**

(22) Anmeldetag: **14.04.88**

(54) **Bearbeitungseinrichtung zum präzisen Drehen einer Mantelfläche.**

(30) Priorität: **16.04.87 CH 1502/87**

(43) Veröffentlichungstag der Anmeldung:
**19.10.88 Patentblatt 88/42**

(45) Bekanntmachung des Hinweises auf die
Patenterteilung:
**25.11.92 Patentblatt 92/48**

(84) Benannte Vertragsstaaten:
**AT CH DE FR GB IT LI NL SE**

(56) Entgegenhaltungen:
EP-A- 0 044 200      EP-A- 0 146 149
DE-A- 2 427 826      DE-B- 1 105 042
GB-A- 18 306         GB-A- 2 168 918
JP-A-59 126 148      JP-A-61 214 901
US-A- 4 584 916

(73) Patentinhaber: **Kummer Frères SA, Fabrique
de machines
Rue de la Promenade 26
CH-2720 Tramelan(CH)**

(72) Erfinder: **Leiber, Hans-Jürgen
Grillons 7
CH-2720 Tramelan(CH)**

(74) Vertreter: **Rochat, Daniel Jean et al
Bovard AG Patentanwälte VSP Optingenstrasse 16
CH-3000 Bern 25(CH)**

## Beschreibung

Die Erfindung betrifft eine Bearbeitungseinrichtung, die auf dem Kreuzschlitten einer Drehmaschine angebracht wird und dazu dient, an Werkstücken eine Mantelfläche und eine daran angrenzende, einen definierten Kurvenlauf aufweisende Schulter mit hoher Präzision zu bearbeiten.

Die Bearbeitungseinrichtung besteht im wesentlichen aus einem Grundkörper in dem ein Schieber axial beweglich gelagert ist, einer Werkzeugaufnahme, die an dem aus dem Grundkörper ragenden Ende des Schiebers befestigt und in der mindestens ein Drehwerkzeug fest eingespannt ist, einer am anderen Ende des Schiebers angebrachte Tastrolle über welche der Schieber durch Andrückmittel an die, den Kurvenlauf bestimmenden Steuerkurve in Anlage gehalten wird, einer die Steuerkurve tragenden, im Grundkörper drehbar gelagerten Welle und aus Drehantriebsmittel, die mit dieser Welle fest verbunden sind und durch eine entsprechende Steuerung in der Art einer "elektrischen Welle" so mit der, das Werkstück tragenden Hauptspindel in Verbindung stehen, dass die Steuerkurve mit der Hauptspindel winkel- und drehzahlsynchron umläuft.

Werkstücke, die mit der erfindungsgemässen Bearbeitungseinheit gefertigt werden, sind Bandtrommeln für Videogeräte und digitale Kassettenrekorder (DAT). Letztere werden vermutlich in den nächsten Jahren in grossen Stückzahlen hergestellt und damit steigt auch der Bedarf an Bearbeitungseinrichtungen eingangs erwähnter Art zur Herstellung der Bandtrommeln.

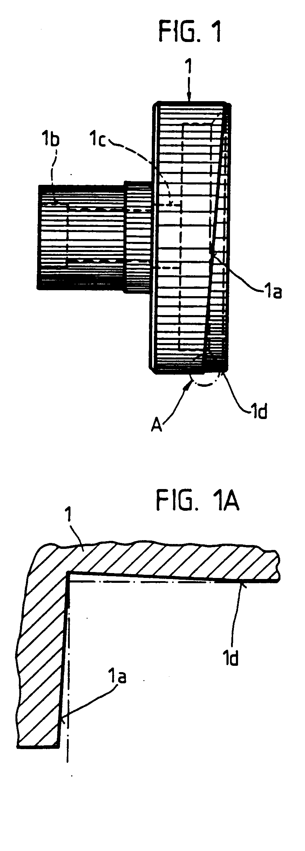

Eine solche Bandtrommel ist in Figur 1 im Aufriss vereinfacht dargestellt und mit 1 bezeichnet; Figur 1A ist ein Teilradialschnitt im Bereich A der Figur 1, in stark vergrössertem Massstab.

Bearbeitungseinrichtungen mit welchen solche Werkstücke bearbeitet werden sind auf diesem Gebiet seit langem bekannt Ständig höhere Anforderungen an die Mass- und Formgenauigkeit sowie der Oberflächengüte der erwähnten Werkstücke zwangen zur Entwicklung einer neuen Bearbeitungseinrichtung, wie sie in der europäischen Veröffentlichung Nr. 0 146 149 beschrieben ist (vgl. Oberbegriff des Anspruchs 1). Diese Einrichtung genügt zwar den hohen Anforderungen im Bezug auf die Genauigkeit der damit zu fertigenden Werkstücke, ist aber in der Bearbeitungsgeschwindigkeit begrenzt, da die Drehzahl nicht wesentlich über 500 t/min gesteigert werden kann. Die Gründe liegen in der verhältnismässig grossen Masse des Rotors und dessen, durch die beiden Bearbeitungswerkzeuge nicht ganz vermeidbaren Unwucht.

In der Veröffentlichung DE-A-24 27 826 ist eine Drehmaschine beschrieben, auf deren Planschlitten ein als Stössel ausgebildeter Meisselhalter vorgesehen ist, dessen rückwärtiges Ende sich an einem mit einem eigenen Antrieb versehen, auf dem Oberschlitten angebrachten Steuerexzenter abstützt. Die Exzentrizität des Steuerexzenters steigt linear von 0 bis zu einem bestimmten Endwert an. In Verbindung mit synchronisierten Antrieben, insbesondere für die Hauptspindel und den Steuerexzenter, lässt sich diese Einrichtung zum Unrund drehen einsetzen, wobei die Exzentrizität der erzeugten Werkstückkontur mittels der durch die Position des Oberschlittens jeweils definierten Exzentrizität des Steuerexzenters einstellen lässt.

Grundsätzlich liesse sich bei der erwähnten Einrichtung die Drehachse des Steuerexzenters auch nicht parallel, sondern in einem Winkel von 0° bis 90° zur Hauptspindel der Drehmaschine anordnen.

Aufgabenstellung der Erfindung ist, eine Drehmaschine mit einer Bearbeitungseinrichtung zu schaffen, die die Anforderungen an die Genauigkeit der zu bearbeitenden Werkstücke erfüllt und eine wesentlich höhere Bearbeitungsgeschwindigkeit ermöglicht.

Diese Aufgabe wird durch die Merkmale des Anspruchs 1 gelöst.

Die Erfindung wird nun anhand der Figuren 2 bis 6 der beiliegenden Zeichnungen beispielsweise erläutert. Es zeigen:

Figur 1 eine Ansicht einer zu bearbeitenden Bandtrommel,

Figur 1A eine Detailansicht in grösserem Massstab entsprechend "A" in Fig. 1,

Figur 2 eine schematisierte Draufsicht einer Drehmaschine, die mit einem Ausführungsbeispiel des Erfindungsgegenstandes ausgerüstet ist,

Figur 3 eine Draufsicht der Bearbeitungseinrichtung,

Figur 4 einen Längsschnitt derselben, nach Linie B-B Fig. 5,

Figur 5 einen Querschnitt derselben, nach Linie A-A Fig. 3,

Figur 6 einen Teillängsschnitt derselben, nach Linie C-C Fig. 5, und

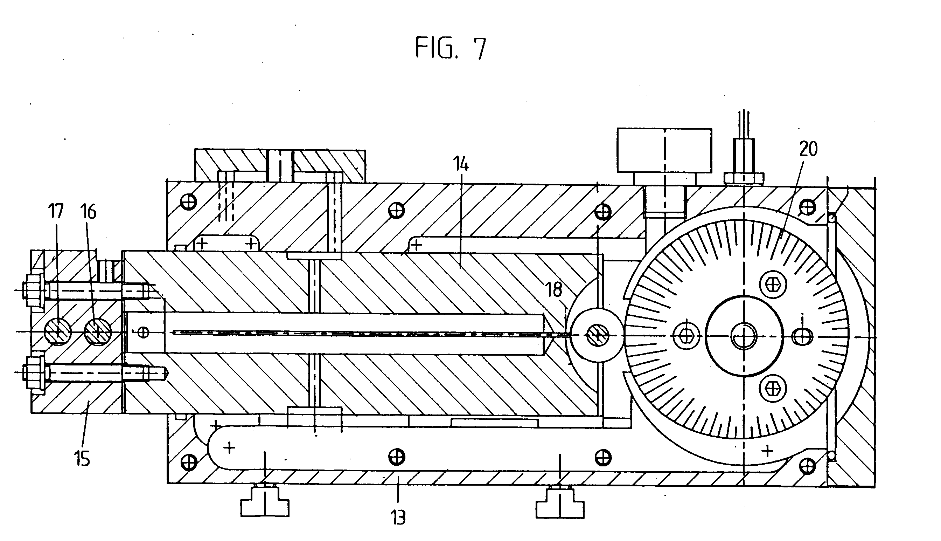

Figur 7 einen Schnitt nach der Linie VII-VII der Fig. 4.

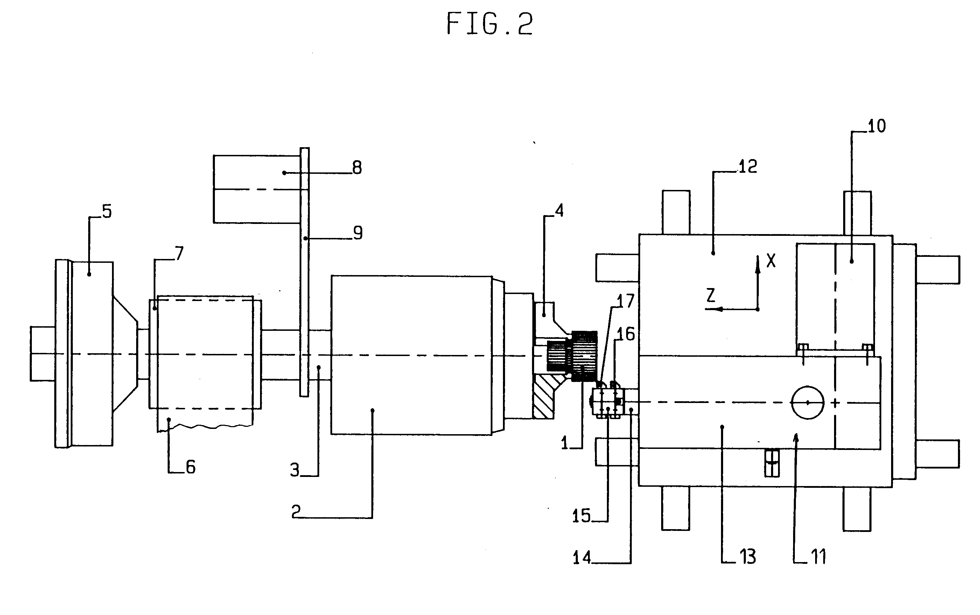

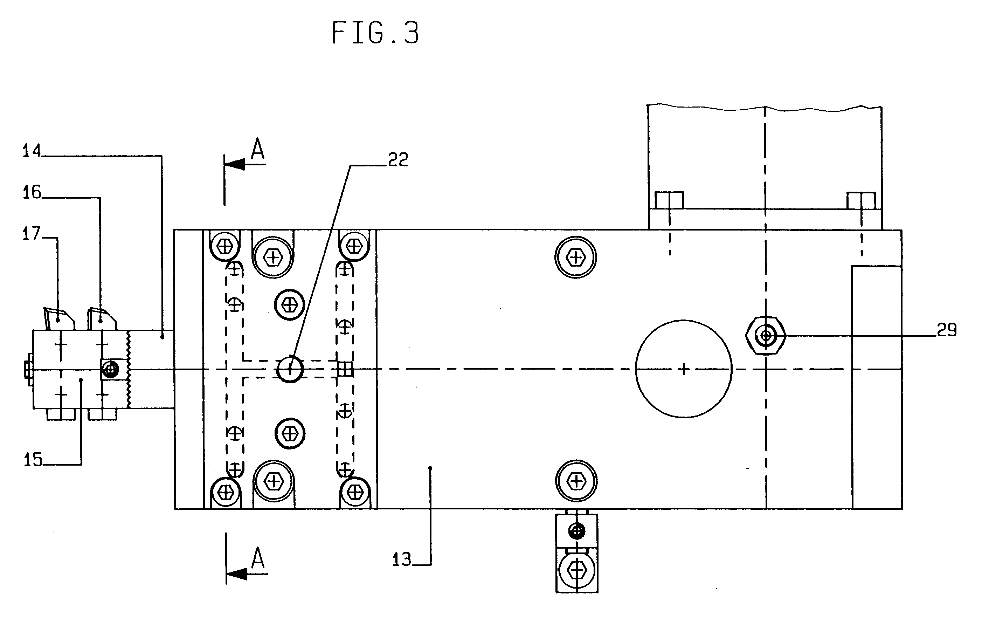

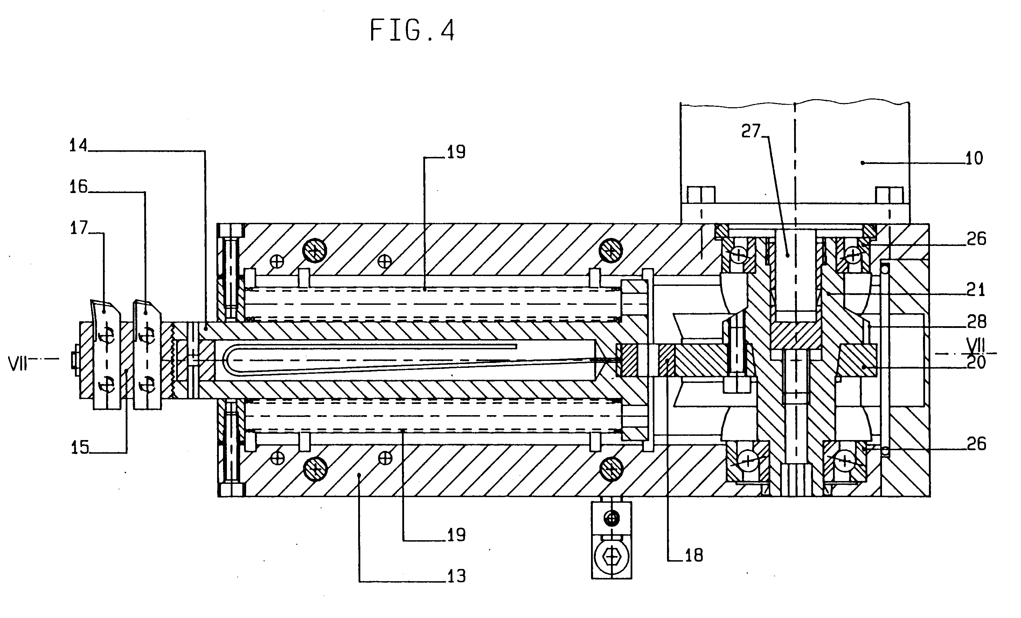

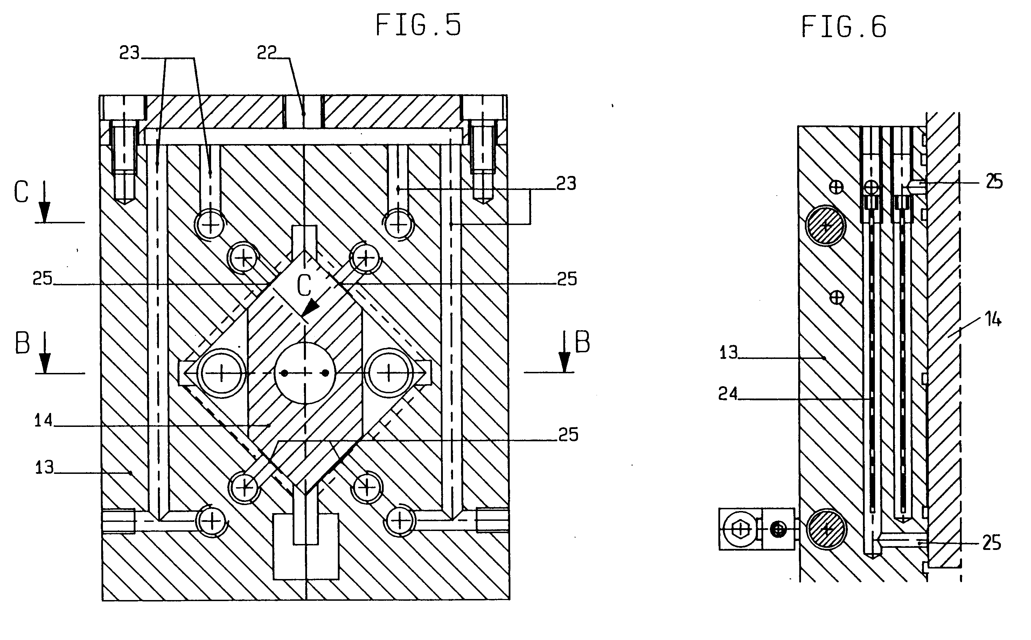

Die Drehmaschine nach Figuren 2-6 hat einen Spindelstock 2, in dem eine Hauptspindel 3 mit einem durch einen pneumatischen Spannzylinder 5 betätigten Spannfutter 4 angeordnet ist. Der Drehantrieb dieser Hauptspindel 3 erfolgt durch einen nicht gezeigten Elektromotor, der durch ein Riemengetriebe mit dem Riemen 6 und mit der auf der Hauptspindel 3 sitzenden Riemenscheibe 7 mit dieser Spindel antriebsverbunden ist. Durch einen Zahnriemen 9 mit der Hauptspindel 3 antriebsverbunden, ist auch ein inkrementaler Drehgeber 8, der als Drehzahlgeber für den Antriebsmotor 10 der Bearbeitungseinrichtung wirkt.

Die den Erfindungsgegenstand bildende Bearbeitungseinrichtung ist zusammenfassend mit 11 bezeichnet und auf dem Kreuzschlitten 12 der Drehmaschine befestigt, so dass sie durch Bewegungen dieses Kreuzschlittens in und ausser Wirklage gebracht werden kann. Die Bearbeitungseinrichtung 11 hat einen auf dem Kreuzschlitten 12 befestigten Grundkörper 13, in dem der Schieber 14 längsbeweglich und hydrostatisch gelagert ist. Die Oelleitung für die hydrostatische Lagerung wird bei der Gewindebohrung 22 angeschlossen und das Oel fliesst durch die Bohrungen 23 und die Kapillaren 24 zu den Lagertaschen 25.

An dem aus dem Grundkörper 13 herausragenden Ende des Schiebers 14 ist eine höhenverstellbare Werkzeugaufnahme 15 angeschraubt, in welcher die beiden Drehwerkzeuge 16 und 17 befestigt sind. Am anderen Ende des Schiebers 14 ist eine halbzylindrische Tasche eingearbeitet, in welcher eine hydrostatisch entlastete Tastrolle 18, abgestützt ist.

Durch die Andrückmittel 19 und über die Tastrolle 18 wird der Schieber 14 an der Steuerkurve 20 in Anlage gehalten. Das Profil der Steuerkurve 20 ist ein genaues Abbild des Profiles der am Werkstück 1 zu erzeugenden Schulter 1a. Die Steuerkurve 20 ist auf der Welle 21 durch die Lager 26 im Grundkörper 13 drehbar gelagert. Das eine Ende der Welle 21 ist als kraftschlüssige Wellen-Nabenverbindung ausgebildet in der die Antriebswelle 27 des Elektromotors 10 fest eingespannt. Der besagte Elektromotor ist im Ausführungsbeispiel ein Schrittmotor, dessen Schrittzahl pro Umdrehung mit der Impulszahl pro Umdrehung des Drehgebers 8 übereinstimmt und dessen Drehgeschwindigkeit von diesem, mit der Hauptspindel 3 antriebsverbundenen Drehgeber, über eine geeignete Ansteuereinheit bestimmt wird, so dass die Steuerkurve 20 mit der Hauptspindel 3 genau drehzahlsynchron läuft.

Als Antrieb der Steuerkurve könnte auch ein mit einem Drehgeber ausgerüsteter Gleich- oder Drehstrommotor in Frage kommen, der dann mittels einer geeigneten Steuerung die Steuerkurve 20 ebenfalls drehzahlsynchron mit der Hauptspindel 3 antreiben würde.

In die Welle 21 ist eine schmale Nute 28 eingearbeitet, die den Kontakt der Welle 21 mit dem Näherungsschalter 29 in einer genau bestimmten Winkellage unterbricht. Somit ergibt sich pro Umdrehung der Steuerkurve 20 ein Referenz-Signal und auch der inkrementale Drehgeber 8 gibt pro Umdrehung ein Referenz-Signal in einer definierten Winkellage ab.

Die beschriebene Bearbeitungseinrichtung wirkt nun wie folgt:

Nachdem namentlich die Bohrungen 1b und 1c des im Futter 4 festgespannten Werkstückes 1 bearbeitet worden sind, wird die Bearbeitungseinrichtung 11 durch den Kreuzschlitten 12 in Arbeitsstellung gebracht. Die Drehzahl der Hauptspindel 3 wird auf einen niederen Wert abgebremst und der Antriebsmotor 10 der Bearbeitungseinrichtung 11 dreht die Steuerkurve 20 in ihre Referenzlage. Durchläuft nun der Drehgeber 8 sein Referenz-Signal, so wird der Antriebsmotor 10 eingeschaltet und beginnt sich winkel- und drehzahlsynchron mit der Hauptspindel 3 zu drehen. Die Drehzahl der Hauptspindel 3 wird nun auf die Bearbeitungsdrehzahl beschleunigt, wobei der Antriebsmotor 10 folgt. Durch den Kreuzschlitten 12 erfährt nun die Bearbeitungseinrichtung 11 eine Vorschubbewegung in Z-Richtung und das Werkzeug 17 bearbeitet zunächst die Mantelfläche 1d am Werkstück 1. Hierbei wird auch bereits die Schulter 1a vorgefertigt, weil ja der Schieber 14, auf dem das Werkzeug 17 mittels der Werkzeugaufnahme 15 befestigt ist, unter der Einwirkung der Federn 19 dem Profil der Steuerkurve 20 folgt, also während jeder Umdrehung axial hin- und herbewegt wird. Sobald die Fertigung der Mantelfläche 1d beendet ist, hebt das Werkzeug 17 durch eine X-Bewegung des Kreuzschlitten 12 ab, dieser fährt anschliessend in Z-Richtung vor und bringt das gegenüber dem Werkzeug 17 vorstehende Werkzeug 16 in seine Arbeitsstellung. Die Endfertigung der Schulter 1a und des angrenzenden Teiles der Mantelfläche 1d (Figur 1A) erfolgt nun in einem einfachen Einstechvorgang durch eine Verschiebung des Kreuzschlitten 12 in X-Richtung. Sobald dieser Fertigungsvorgang beendet ist, bewegt sich der Kreuzschlitten 12 in seine Ausgangsstellung, damit anschliessend das fertige Werkstück 1 aus dem Futter 4 ausgespannt werden kann.

Durch die geringe hin- und herbewegte Masse des Werkzeughalters 15 und des Schiebers 14 sowie dessen hydrostatischen Lagerung, werden bei ausgezeichneter Qualität der gefertigten Werkstücke Drehzahlen für die Bearbeitung der Mantelfläche 1d und der Schulter 1a von ca. 1000 t/min erreicht, dies ist das Doppelte der mit den vorbekannten Mitteln erreichten Werte. Durch die hydrostatisch abgestützte Tastrolle 18 gibt es auch praktisch keinen Verschleiss in der Lagertasche und es findet eine optimale Schmierung zwischen der Tastrolle 18 und der Steuerkurve 20 statt. Da zudem zwischen der Bearbeitungseinrichtung 11 und der Hauptspindel 3 keine mechanische Verbindung besteht, kann sich der Kreuzschlitten 12 in seinem ganzen Arbeitsbereich ungehindert bewegen und zum Fertigen der Bohrungen 1b und 1c können mit der Hauptspindel 3 Drehzahlen von über 6000 t/min gefahren werden. All dies trägt dazu bei, dass mit der erfindungsgemässen Bearbeitungseinrichtung die Bandtrommeln von Videogeräten und DAT-Rekordern wesentlich rationeller gefertigt werden können.

**Patentansprüche**

1. Drehmaschine mit einer Bearbeitungseinrichtung zur hochpräzisen spanabhebenden Bearbeitung einer Mantelfläche (1b) und einer daran angrenzenden, einen definierten Kurvenverlauf aufweisenden Schulter (1a) an Bandtrommeln für Videogeräte und digitale Kassettenrecorder (1), mit einer um eine Hauptachse drehbaren Hauptspindel (3), mit einem an der Hauptspindel angebrachten Spannfutter (4) für das Werkstück (1), mit einem mindestens ein Drehwerkzeug (16, 17) tragenden, gegenüber dem Werkstück (1) parallel (Z) und senkrecht (X) zur Hauptachse beweglich geführten Schieber (14), wobei der Schieber in einem Grundkörper (13) parallel (Z) zur Hauptachse geführt und hydrostatisch gelagert ist und der Grundkörper (13) fest auf dem in die Richtungen Z und X bewegbaren oberen Teil eines Kreuzschlittens (12) gelagert ist, und ferner mit einem Steuerantrieb, der über eine hydrostatisch entlastete Tastrolle (18) die Längsbewegungen (Z) des Schiebers (14) bewirkt, dadurch gekennzeichnet, dass der Steuerantrieb eine um eine senkrecht zur Hauptachse gerichtete Achse drehende Radialsteuerkurve (20) umfasst, die koaxial mit dem Rotor (27) eines Antriebsmotors (10) fest verbunden ist, auf den Schieber (14) in Z-Richtung wirkt, und deren Lagerung (26) fest mit dem Grundkörper (13) verbunden ist, wobei eine elektrische Verbindung zwischen der Hauptspindel und dem Antriebsmotor (10) für einen drehzahlsynchronen Antrieb des Schiebers (14) in bezug auf das Werkstück (1) sorgt.

2. Maschine gemäss Anspruch 1, dadurch gekennzeichnet, dass zwei in X-Richtung gerichtete Drehwerkzeuge (16, 17) am Schieber (14) regelbar befestigt sind.

3. Drehmaschine gemäss Anspruch 1, dadurch gekennzeichnet, dass der hydrostatisch gelagerte Schieber (14) sich infolge der Wirkung einer Steuerkurve (20) gegen die Kraft einer Feder (19) bewegt.

4. Drehmaschine gemäss Anspruch 3, dadurch gekennzeichnet, dass der Grundkörper (13) eine mit einer Flüssigkeit gefüllte Lagertasche aufweist, in welcher sich die Steuerkurve (20) und die zwischen dem Schieber (14) und der Steuerkurve (20) abgestützte Tastrolle (18) befindet.

5. Drehmaschine gemäss Anspruch 1, gekennzeichnet durch einen mit der Hauptspindel (3) drehzahlverbundenen Drehgeber (8), der als Sender eines Referenzsignals einen Teil der genannten elektrischen Verbindung bildet.

6. Drehmaschine gemäss Anspruch 5, dadurch gekennzeichnet, dass der Antriebsmotor ein Schrittmotor ist.

7. Drehmaschine gemäss Anspruch 5, dadurch gekennzeichnet, dass der Antriebsmotor ein Gleich- oder Drehstrommotor ist.

8. Drehmaschine gemäss Anspruch 5, dadurch gekennzeichnet, dass sowohl der Drehgeber (8) wie eine die Steuerkurve (20) tragende Welle (21) so angeordnet sind, dass sie pro Umdrehung je ein Referenzsignal ergeben, so dass über die Steuerung ein winkel- und drehzahlsynchroner Gleichlauf zwischen der Steuerkurve (20) und der Hauptspindel (3) erreicht werden kann.

**Claims**

1. A lathe with a machining device for high-precision material-detaching machining of a lateral surface (1b) and of a contiguous shoulder (1a) having a specific course of curvature on tape drums for video-recorders and digital cassette recorders (1), with a main spindle (3) rotatable around a main axis, with a chuck (4) disposed on the main spindle for the workpiece (1), with a slide (14) bearing at least one turning tool (16, 17) and being movable with respect to the workpiece (1) parallel (Z) and vertical (X) to the main axis, the slide being hydrostatically mounted in a base body (13) parallel (Z) to the main axis and the base body (13) being rigidly mounted on the upper portion of a cross-slide (12) which is movable in the directions Z and X, and also having a drive means causing the longitudinal movements (Z) of the slide (14) via a hydrostatically balanced feeler roller (18), characterized in that the drive means comprises a radial cam (20) rotating about an axis arranged vertically to the main axis, said radial cam being rigidly and coaxially connected with the rotor (27) of a drive motor (10), acting on the slide (14) in the Z-direction, and whose bearing (26) is rigidly connected with the base body (13), and there being an electric connection between the main spindle and the drive motor (10) for synchronizing the drive of the slide (14) with respect to the workpiece (1).

2. The machine of claim 1, characterized in that two turning tools (16, 17) directed in the X-direction are regulatably affixed to the slide (14).

3. The lathe of claim 1, characterized in that the hydrostatically mounted slide (14) is displaced due to the effect of a cam (20) against the force of a spring (19).

4. The lathe of claim 3, characterized in that the base body (13) has a bearing chamber filled with a liquid, in which are located the cam (20) and the feeler roller (18) which is supported between the slide (14) and the cam (20).

5. The lathe of claim 1, characterized by a shaft encoder (8) rotatingly connected to the main spindle (3), and which, as the transmitter of a reference signal, forms a part of said electrical connection.

6. The lathe of claim 5, characterized in that the drive motor is a stepping motor.

7. The lathe of claim 5, characterized in that the drive motor is a DC or polyphase induction motor.

8. The lathe of claim 5, characterized in that both the shaft encoder (8) and a shaft (21) bearing the cam (20) are arranged so that per revolution they each emit a reference signal, so that via the control the rotation and angle of the cam (20) and the main spinle (3) can be synchronized.

**Revendications**

1. Machine de tournage comprenant un dispositif d'usinage pour le tournage hautement précis, avec enlèvement de matière, d'une surface cylindrique (1b) avec, à proximité, un épaulement (1a) présentant un déroulement de courbe défini sur un tambour pour bande d'appareil vidéo ou d'enregistreur à cassettes digital (1), comprenant un arbre principal (3) tournant autour d'un axe principal, un mandrin (4) équipant l'arbre principal pour tenir la pièce à travailler (1), un coulisseau (14) portant au moins un outil de coupe de tournage (16, 17) étant conduit pour se déplacer vis-à-vis de la pièce à travailler (1) d'une façon parallèle (Z) et perpendiculaire (X) à l'axe principal, le coulisseau étant guidé parallèlement à l'axe principal (Z) dans un corps de base (13), la conduite du coulisseau dans le corps de base (13) étant hydrostatique, ce corps de base (13) étant lui-même fixement monté sur la partie supérieure, mobile dans les directions Z et X, d'un chariot à coulissement croisé (12), un agencement d'entraînement de commande provoquant les mouvements longitudinaux (Z) du coulisseau (14) par l'intermédiaire d'un rouleau palpeur (18) hydrostatiquement déchargé, caractérisée en ce que l'agencement d'entraînement de commande comprend une courbe-came agissant radialement (20) qui tourne autour d'un axe dirigé perpendiculairementÉà l'axe principal, cette courbe-came radiale étant fermement liée au rotor (27) d'un moteur d'entraînement (10), la came étant coaxiale au rotor et agissant sur le coulisseau (14) dans la direction Z, les paliers (26) du rotor étant montés dans le corps de base (13), une liaison électrique entre l'arbre principal et le moteur d'entraînement (10) assurant un entraînement synchrone quant au nombre de tours du coulisseau (14) par rapport à la pièce à travailler (1).

2. Machine de tournage selon la revendication 1, caractérisée en ce que deux outils de coupe de tournage (16, 17) sont fixés de façon réglable au coulisseau (14), ces outils étant dirigés dans la direction X.

3. Machine de tournage selon la revendication 1, caractérisée en ce que le coulisseau monté hydrostatiquement (14) se meut par suite de l'action d'une came-courbe de commande (20) contre la force d'un ressort (19).

4. Machine de tournage selon la revendication 3, caractérisée en ce que le corps de base (13) présente une poche de paliérage remplie d'un liquide dans laquelle se trouve la courbe de commande (20) de même que le rouleau palpeur (18) situé entre le coulisseau (14) et la came-courbe de commande (20).

5. Machine de tournage selon la revendication 1, caractérisée par un donneur d'information de tours (8) lié en rotation avec l'arbre principal (3), ce donneur formant une partie de la dite liaison électrique, en tant qu'émetteur d'un signal de référence.

6. Machine de tournage selon la revendication 5, caractérisée en ce que le moteur d'entraînement est un moteur pas à pas.

7. Machine de tournage selon la revendication 5, caractérisée en ce que le moteur d'entraînement est un moteur à courant continu ou à courant rotatoire (polyphasé).

8. Machine de tournage selon la revendication 5, caractérisée en ce que, aussi bien le donneur d'information de tours (8) que l'arbre (21) portant la courbe-came de commande (20) sont agencés de façon telle que soit émis un signal de référence par tour, de manière telle que puisse être atteinte une uniformité de marche synchrone, relative à l'angle et au nombre de tours, entre la courbe-came de commande (20) et la broche principale (3).

FIG. 1

FIG. 1A

# FIG.2

EP 0 287 519 B1

FIG. 3

FIG.4

FIG.5

FIG.6

EP 0 287 519 B1

FIG. 7

EP 0 287 519 B1